# FASCICULE DE BREVET EUROPEEN

(11) **EP 3 172 173 B1**
(45) Date de publication et mention de la délivrance du brevet: **11.09.2019**
(21) Numéro de dépôt: 15753402.5
(22) Date de dépôt: 23.07.2015
(51) Int. Cl.: C03B 33/023, C03B 33/03, C03B 33/033, C03B 33/04, C03B 33/037, C03B 33/02

(54) **PROCÉDÉ DE FABRICATION DE FEUILLES DE VERRE DE FORME COMPLEXE**
VERFAHREN ZUR HERSTELLUNG VON GLASSCHEIBEN MIT KOMPLEXER FORM
METHOD FOR MANUFACTURING SHEETS OF GLASS OF COMPLEX SHAPE

(30) Priorité: 24.07.2014 FR 1457172
(43) Date de publication de la demande: 31.05.2017
(73) Titulaire: Saint-Gobain Glass France, 92400 Courbevoie (FR)
(72) Inventeur: DUMENIL, Thierry, 60280 Margny Les Compiegne (FR); BURELOUX, Dominique, 02300 Ognes (FR)
(74) Mandataire: Saint-Gobain Recherche
(86) Numéro de dépôt international: PCT/FR2015/052046
(87) Numéro de publication internationale: WO 2016/012727

(56) Documents cités:
- EP-A1- 0 018 925
- EP-A2- 0 587 542
- FR-A- 1 548 431
- US-A- 4 278 193
- US-A1- 2013 174 610

## Description

La présente invention concerne le domaine de la découpe de vitrages de forme complexe, tels que par exemple les vitrages de véhicule automobile.

Les découpes de ces vitrages sont généralement réalisées en deux temps à partir d'une feuille de verre « grand format », également appelée « PLF » ou « DLF ».

Il s'agit de feuilles de verre dont au moins une dimension correspond à la largeur du ruban de verre flotté dont elles sont issues. Les « PLF » sont obtenus directement par découpe transversale dans le ruban de verre flotté. La largeur des PLF correspond à la largeur du ruban de verre flotté. Leur longueur correspond à la longueur de ruban découpé. Les DLF sont des feuilles de verre plus petites, dont la longueur correspond quant à elle à la largeur du ruban de verre flotté. Les DLF sont obtenus soit directement par découpe dans le ruban de verre flotté mais avec une longueur de ruban découpé inférieure à la largeur du ruban de verre flotté, ou bien obtenus par découpe du PLF transversalement à sa longueur. Ainsi, dans la pratique, les PLF ont des dimensions minimales d'au moins 2,9m par au moins 4,7m et les DLF des dimensions d'au moins 2,9m par au moins 1,3m.

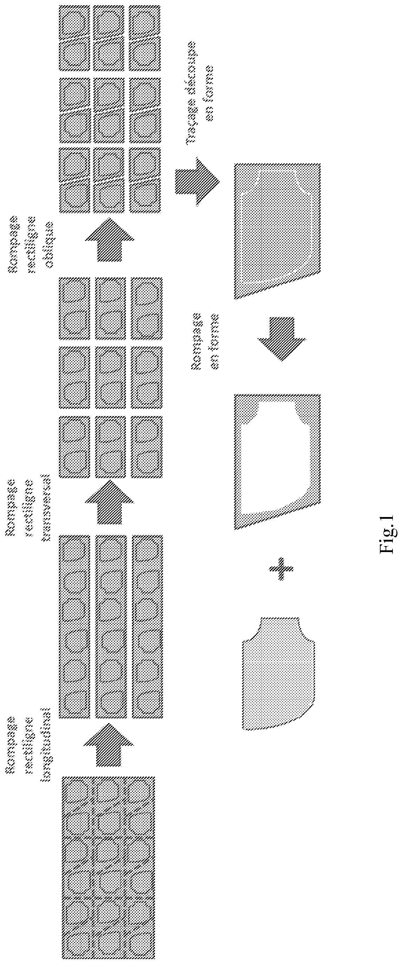

Pour fabriquer un vitrage de forme complexe, des étapes ultérieures de découpe sont nécessaires. On procède généralement dans un premier temps à la découpe dans les PLF ou DLF, de feuilles de verre de forme rectangulaire ou trapézoïdale, appelés « primitifs ». Il s'agit de feuilles de verre dont la forme est un polygone convexe contenant le vitrage définitif de forme complexe à réaliser tout en laissant sur tout le pourtour un « trim » suffisant pour procéder au rompage. C'est ce qui est illustré sur la figure 1.

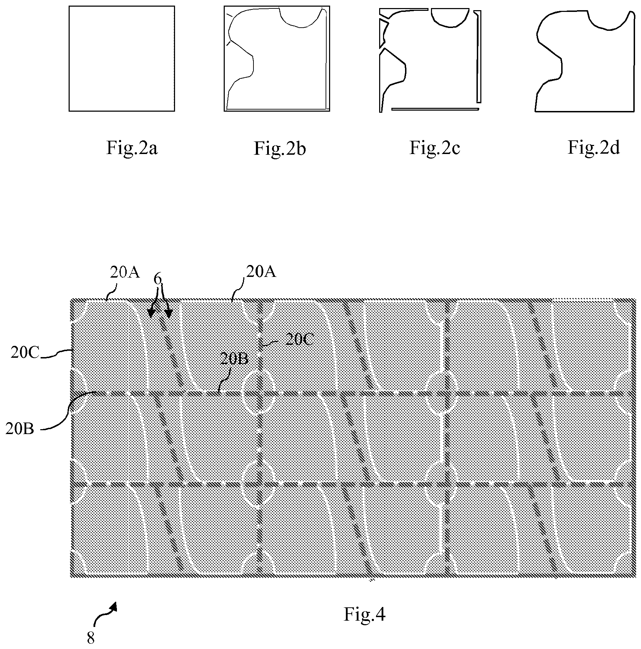

Dans un deuxième temps, on procède sur un deuxième poste de découpe à la mise en forme du vitrage à façonner, c'est-à-dire à la découpe des « trims » sur tout le pourtour du primitif de façon à ce que les bords du vitrage soient désormais prêts à façonner. Pour cela, plusieurs traits de découpe sont par exemple réalisés comme illustré sur les figures 2a-2d pour un exemple de primitif carré. Un façonnage consistant en un meulage est ensuite réalisé ultérieurement.

La découpe des primitifs dans les PLF ou DLF est ainsi effectuée sur un premier poste de découpe tandis que la mise en forme des vitrages prêts à façonner
est quant à elle réalisée sur un deuxième poste de découpe. Sur chaque poste de découpe on procède :
- au traçage de traits de découpe ; et
- au rompage le long des traits de découpe.

Néanmoins, ce procédé présente l'inconvénient de générer une surface de chute importante.

Le document EP 0 587 542 décrit également un procédé de découpe de feuilles de verre.

Un but de l'invention est de réduire la surface des chutes de matière première lors de la découpe de vitrages de forme complexe dans des PLF ou DLF.

Selon un aspect de l'invention, il s'agit d'un procédé de fabrication d'une pluralité de vitrages de forme complexe à partir d'une feuille de verre flotté rectangulaire de grandes dimensions ayant au moins une dimension correspondant à la largeur du ruban de verre flotté à partir duquel elle est produite, comprenant :
- sur un premier poste de découpe de ladite feuille de verre, une étape de traçage d'au moins un trait de découpe correspondant à au moins un bord prêt à façonner des vitrages ;
- une première étape de rompage ;
- sur un deuxième poste de découpe, une étape de traçage d'au moins un trait de découpe correspondant à au moins un autre bord prêt à façonner des vitrages ;
- une deuxième étape de rompage.

La première étape de découpe génère moins de chutes, en particulier cette étape économise les « trims » le long des bords qui sont découpés de façon être directement prêts à façonner. Pour ce faire, il sera nécessaire lors de la première étape de découpe, d'avoir une précision suffisante dans le traçage du trait de découpe. En outre, tandis que la première étape présentera toujours l'avantage de ne pas nécessiter de focalisation précise (i.e. étape de mise en référence du verre), la deuxième étape devra intégrer une étape de focalisation précise avant traçage.

Selon des modes particuliers de réalisation, le procédé présente en outre l'une ou plusieurs des caractéristiques suivantes, prise(s) seule(s) ou suivant toutes les combinaisons techniquement possibles :
- la précision de traçage des traits de découpe sur le premier poste de découpe est de +/- 0,2mm ;
- le deuxième poste de découpe intègre une étape de focalisation précise à +/-0,1mm ;
- sur le premier poste de découpe, le trait de découpe est un trait rectiligne traversant la feuille de verre d'un bord à l'autre ;
- sur le premier poste de découpe, le trait de découpe forme un bord prêt à façonner de plusieurs vitrages d'un même côté du trait de découpe ;
- sur le premier poste de découpe, le trait de découpe forme en outre un bord prêt à façonner de plusieurs vitrages de l'autre côté du trait de découpe ;
- de chaque côté du trait de découpe, les bords prêts à façonner sont le même bord des vitrages ;
- de chaque côté du trait de découpe, les bords prêts à façonner sont les bords opposés des vitrages ;
- la première étape de rompage forme un primitif pour chaque vitrage à fabriquer, la deuxième étape de rompage formant le vitrage prêt à façonner ;
- le procédé comprend au moins un poste de découpe supplémentaire, avec au moins une étape de rompage supplémentaire ;
- le procédé comprend, après l'étape de deuxième rompage, une étape de façonnage du vitrage ;
- le façonnage est un meulage ;
- on procède à deux étapes de meulage ;
- la feuille de verre de grand format a au moins une dimension d'au moins 2,9m.

Comme il est bien connu de l'homme de l'art, une forme complexe est par exemple délimitée par une ligne courbe, ou une succession de traits dont certains au moins ne sont pas rectilignes, ou traits rectilignes avec changements de direction formant au moins une partie concave (dans ce cas, par exemple, la partie concave forme une encoche).

L'invention sera mieux comprise à la lecture de la description qui va suivre, faite uniquement à titre d'exemple non limitatif, en se référant aux figures suivantes :
- la figure 3 est un schéma d'ensemble expliquant les différentes étapes de découpe et de rompage selon un exemple de mise en oeuvre de l'invention ;
- la figure 4 est un schéma illustrant un autre exemple de design de découpe.

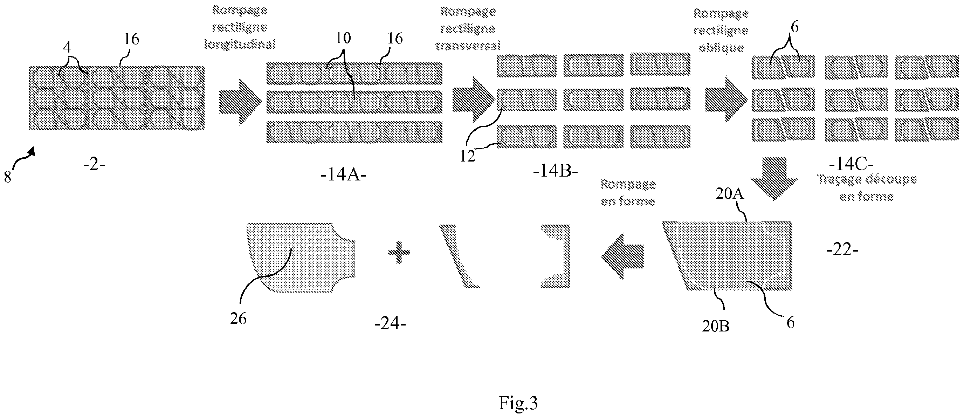

Comme illustré sur la figure 3, il est procédé, sur un premier poste de découpe 2, à tous les traits de découpe illustrés (en pointillés) 4, de façon à découper les primitifs 6 dans les PLF 8 (ou DLF). Il s'agit ici de traits longitudinaux bord à bord pour former des travers longitudinaux 10, de traits transversaux bord à bord pour former des travers transversaux 12, et de traits obliques bord à bord coupant les travers formés en deux pour obtenir deux primitifs 6 symétriques par rapport à ce trait de découpe oblique.

L'opération de découpe, c'est-à-dire de traçage des traits de découpe, est réalisée sur un même poste, appelé premier poste de découpe 2, avant que ne soient réalisées plusieurs étapes de rompage 14A, 14B, 14C successivement sur des tables différentes.

Le traçage des traits de découpe est par exemple réalisé au moyen d'une molette de verrier ou de tout autre instrument de découpe adapté, tel que par exemple un laser. Le trait de découpe est une fissure destinée à permettre le rompage suivant ce trait lors de l'étape de rompage. Il s'agit donc d'une découpe partielle, i.e. seulement sur une partie de l'épaisseur de la feuille de verre. C'est ce qu'on entend par « trait de découpe » dans tout le texte.

Le schéma de gauche sur la figure 3 correspond à l'étape de découpe.

Sur la figure 3, le schéma suivant illustre le rompage rectiligne longitudinal 14A selon les premiers traits longitudinaux. Il s'agit de traits longitudinaux et rectilignes tracés d'un bord à l'autre, i.e. traversants. Ces traits sont parallèles au bord longitudinal 16 de la feuille de verre grand format 8 et régulièrement espacés, de façon à former des travers longitudinaux 10 identiques. En variante cependant, les travers ne sont pas nécessairement de même largeur et ont d'une manière générale une largeur de tout type adapté.

Le schéma suivant montre quant à lui le rompage rectiligne transversal 14B. A noter que rompage longitudinal et transversal peuvent en variante être inversés, c'est-à-dire que l'on procède d'abord à un rompage transversal puis ensuite à un rompage longitudinal. Les traits transversaux en exemple sont parallèles au bord transversal de la feuille de verre grand format. Il s'agit également de traits rectilignes traversants. Le rompage transversal consiste également à réaliser des travers 12 identiques, dans cet exemple. Plus généralement, les travers seront cependant de longueur de tout type adapté.

Sur le schéma de droite, est illustrée l'étape de rompage oblique 14C pour départager les deux primitifs restant dans les travers obtenus. Les traits de découpe sont des traits rectilignes traversants et sont obliques dans cet exemple.

En variante encore, les rompages sont combinés dans un ordre différent de tout type adapté.

Plus particulièrement, comme visible plus clairement sur le dessin de primitif en bas à droite de la figure 3, certains traits de découpe réalisés sur le premier poste de découpe correspondent aux bords supérieur 20A et inférieur 20B prêts à façonner du primitif 6. En effet, les traits de découpe longitudinaux forment alternativement les bords inférieur et supérieur des primitifs situés au-dessus du trait de découpe et alternativement les bords supérieur et inférieur des primitifs situés sous le trait de découpe, pour chaque trait de découpe longitudinal.

Les primitifs sont ici prévus agencés de la même façon dans chaque travers longitudinal 10. En variante cependant, les primitifs sont par exemple agencés symétriquement par rapport aux traits de découpe longitudinaux ou suivant un autre agencement de tout type adapté.

En variante, il ne s'agit pas des bords inférieur et supérieur des primitifs qui sont réalisés ainsi mais d'autres bords des primitifs. D'une manière générale, il s'agit de deux bords prêts à façonner des primitifs, d'une manière plus générale encore d'au moins un bord prêt à façonner.

A noter que tous les traits de découpe réalisés sur le premier poste de découpe illustré en exemple sont des traits de découpe rectilignes et traversants. En variante cependant, il s'agit de traits non rectilignes et/ou non traversants.

En variante également, ce sont les traits de découpe transversaux ou les traits de découpe obliques, ou, plus généralement l'un au moins des traits de découpe réalisés sur le premier poste de découpe qui forme un bord prêt à façonner des vitrages.

Ainsi d'une manière générale, on procède :
- sur un premier poste de découpe, à une étape de traçage d'au moins un trait de découpe correspondant à au moins un bord prêt à façonner des vitrages,
- une première étape de rompage,
- sur un deuxième poste de découpe 22, une étape de traçage d'au moins un trait de découpe correspondant à au moins un autre bord prêt à façonner des vitrages ;
- une deuxième étape de rompage 24.

La première étape de découpe est une étape de découpe d'une pluralité de primitifs 6 dans ladite feuille de verre 8 issue du ruban de verre flotté. Comme expliqué précédemment, les primitifs obtenus après la première étape de rompage ont au moins un bord correspondant à un bord prêt à façonner du vitrage. La deuxième étape de découpe 22 est une étape de découpe du vitrage prêt à façonner 26, aussi couramment appelée étape de mise en forme du vitrage 26.

Il convient de noter que la mise en oeuvre de l'invention nécessite une bonne précision de découpe sur le premier poste de découpe 2. Ainsi, la précision de traçage des traits de découpe sur le premier poste de découpe, i.e. sur la feuille de verre grand format, sera de préférence de +/- 0,2mm.

En outre, le deuxième poste de découpe intègre une étape de focalisation précise à de préférence +/- 0,1mm. Cette focalisation est typiquement réalisée avec un référentiel isostatique et consiste par exemple en la mise en contact de trois points du vitrage avec deux butées sur un bord du vitrage et une butée sur un autre bord, tandis que le vitrage est à plat sur une table. Il peut aussi s'agir par exemple d'un système optique ou mixte contact / optique.

La figure 4 illustre un autre exemple dans lequel les traits de découpe transversaux ont également été utilisés pour former des bords prêts à façonner 20C. Sur la figure 4, l'un des bords de chaque primitif obtenu par découpe rectiligne transversale dans le PLF ou DLMF est en effet un bord prêt à façonner.

A noter d'ailleurs qu'après découpe des vitrages prêts à façonner, ces derniers sont façonnés par exemple par meulage. Selon une variante, il s'agit de deux meulages.

On entend par « bord prêt à façonner » qu'aucune étape de découpe n'est plus nécessaire pour ce bord.

## Revendications

1. Procédé de fabrication d'une pluralité de vitrages (26) de forme complexe à partir d'une feuille de verre flotté (8) rectangulaire de grandes dimensions ayant au moins une dimension correspondant à la largeur du ruban de verre flotté à partir duquel elle est produite, comprenant :
- sur un premier poste de découpe (2) de ladite feuille de verre (8), une étape de traçage d'au moins un trait de découpe (4) correspondant à au moins un bord prêt à façonner (20A, 20B) des vitrages ;
- une première étape de rompage (14A, 14B, 14C) ;
- sur un deuxième poste de découpe (22), une étape de traçage d'au moins un trait de découpe correspondant à au moins un autre bord prêt à façonner (20C) des vitrages (26) ;
- une deuxième étape de rompage.

2. Procédé selon la revendication 1, dans lequel, la précision de traçage des traits de découpe (4) sur le premier poste de découpe est de +/- 0,2mm.

3. Procédé selon la revendication 1 ou 2, dans lequel le deuxième poste de découpe (22) intègre une étape de focalisation précise à +/- 0,1mm.

4. Procédé selon l'une quelconque des revendications précédentes, dans lequel, sur le premier poste de découpe (2), le trait de découpe (4) est un trait rectiligne traversant la feuille de verre d'un bord à l'autre.

5. Procédé selon l'une quelconque des revendications précédentes, dans lequel, sur le premier poste de découpe (2), le trait de découpe (4) forme un bord prêt à façonner (20A) de plusieurs vitrages d'un même côté du trait de découpe (4).

6. Procédé selon la revendication précédente, dans lequel, sur le premier poste de découpe (2), le trait de découpe (4) forme en outre un bord prêt à façonner (20B) de plusieurs vitrages (26) de l'autre côté du trait de découpe.

7. Procédé selon la revendication 5 et 6 prises ensemble, dans lequel, de chaque côté du trait de découpe (4), les bords prêts à façonner (20A, 20B) sont le même bord des vitrages (26).

8. Procédé selon la revendication 5 et 6 prises ensemble, dans lequel, de chaque côté du trait de découpe (4), les bords prêts à façonner (20A, 20B) sont les bords opposés des vitrages (26).

9. Procédé selon l'une quelconque des revendications précédentes, dans lequel la première étape de rompage forme un primitif (6) pour chaque vitrage (26) à fabriquer, la deuxième étape de rompage formant le vitrage (26) prêt à façonner.

10. Procédé selon l'une quelconque des revendications précédentes, comprenant au moins un poste de découpe supplémentaire, avec au moins une étape de rompage supplémentaire.

11. Procédé selon l'une quelconque des revendications précédentes, comprenant, après l'étape de deuxième rompage, une étape de façonnage du vitrage (26).

12. Procédé selon la revendication précédente, dans lequel le façonnage est un meulage.

13. Procédé selon la revendication précédente, dans lequel on procède à deux étapes de meulage.

14. Procédé selon l'une quelconque des revendications précédentes, dans lequel la feuille de verre de grand format (8) a au moins une dimension d'au moins 2,9m.

## Patentansprüche

1. Verfahren zum Herstellen einer Mehrzahl von Verglasungen (26) mit komplexer Form ausgehend von einer rechteckigen Schwimmglasscheibe (8) mit großen Dimensionen, die mindestens eine Dimension aufweist, die der Breite des Schwimmglasbands, aus dem sie erzeugt wird, entspricht, umfassend:
- auf einem ersten Schneidposten (2) der Glasscheibe (8), einen Schritt des Ziehens mindestens einer Schneidlinie (4), die mindestens einem Rand, der zum Bearbeiten (20A, 20B) der Verglasungen bereit ist, entspricht;
- einen ersten Schritt des Brechens (14A, 14B, 14C);
- auf einem zweiten Schneidposten (22) einen Schritt des Ziehens mindestens einer Schneidlinie, die mindestens einem anderen Rand, der zur Bearbeitung (20C) der Verglasungen (26) bereit ist, entspricht;
- einen zweiten Schritt des Brechens.

2. Verfahren nach Anspruch 1, wobei die Ziehpräzision der Schneidlinien (4) auf dem ersten Schneidposten ± 0,2 mm beträgt.

3. Verfahren nach Anspruch 1 oder 2, wobei der zweite Schneidposten (22) einen Schritt des Fokussierens auf ± 0,1 mm genau integriert.

4. Verfahren nach einem der vorstehenden Ansprüche, wobei auf dem ersten Schneidposten (2) die Schneidlinie (4) eine gerade Linie ist, die die Glasscheibe von einem Rand zu dem anderen durchquert.

5. Verfahren nach einem der vorstehenden Ansprüche, wobei auf dem ersten Schneidposten (2) die Schneidlinie (4) einen Rand, der zum Bearbeiten (20A) bereit ist, mehrerer Verglasungen auf einer selben Seite der Schneidlinie (4), bildet.

6. Verfahren nach dem vorstehenden Anspruch, wobei auf dem ersten Schneidposten (2) die Schneidlinie (4) außerdem einen Rand, der zum Bearbeiten (20B) mehrerer Verglasungen (26) bereit ist, auf der anderen Seite der Schneidlinie, bildet.

7. Verfahren nach Anspruch 5 und 6 gemeinsam genommen, wobei auf jeder Seite der Schneidlinie (4) die zur Bearbeitung (20A, 20B) bereiten Ränder derselbe Rand der Verglasungen (26) sind.

8. Verfahren nach Anspruch 5 und 6 gemeinsam genommen, wobei auf jeder Seite der Schneidlinie (4) die zur Bearbeitung (20A, 20B) bereiten Ränder auf den entgegengesetzten Rändern der Verglasungen (26) liegen.

9. Verfahren nach einem der vorstehenden Ansprüche, wobei der erste Schritt des Brechens ein Basiselement (6) für jede herzustellende Verglasung (26) bildet, wobei der zweite Schritt des Brechens die Verglasung (26), die zum Bearbeiten bereit ist, bildet.

10. Verfahren nach einem der vorstehenden Ansprüche, das mindestens einen zusätzlichen Schneidposten mit mindestens einem zusätzlichen Schritt des Brechens umfasst.

11. Verfahren nach einem der vorstehenden Ansprüche, das nach dem Schritt des zweiten Brechens einen Bearbeitungsschritt der Verglasung (26) umfasst.

12. Verfahren nach dem vorstehenden Anspruch, wobei die Bearbeitung ein Schleifen ist.

13. Verfahren nach dem vorstehenden Anspruch, wobei zwei Schleifschritte ausgeführt werden.

14. Verfahren nach einem der vorstehenden Ansprüche, wobei die großformatige Glasscheibe (8) mindestens eine Dimension von mindestens 2,9 m aufweist.

## Claims

1. A process for manufacturing a plurality of glazings (26) of complex shape from a rectangular sheet of float glass (8) of large dimensions having at least one dimension corresponding to the width of the ribbon of float glass from which it is produced, comprising:
- at a first station (2) for cutting said glass sheet, a step of scoring at least one cutting line (4) corresponding to at least one ready-to-shape edge (20A, 20B) of the glazings;
- a first breaking step (14A, 14B, 14C);
- at a second cutting station, a step of scoring at least one cutting line corresponding to at least one other ready-to-shape edge (20C) of the glazings (26);
- a second breaking step.

2. The process as claimed in claim 1, wherein the accuracy of scoring the cutting lines (4) at the first cutting station is ± 0.2 mm.

3. The process as claimed in claim 1 or 2, wherein the second cutting station (22) incorporates a focusing step accurate to ± 0.1 mm.

4. The process as claimed in any one of the preceding claims, wherein, at the first cutting station (2), the cutting line (4) is a straight line passing through the glass sheet from one edge to the other.

5. The process as claimed in any one of the preceding claims, wherein, at the first cutting station (2), the cutting line (4) forms a ready-to-shape edge (20A) of several glazings on the same side of the cutting line (4).

6. The process as claimed in the preceding claim, wherein, at the first cutting station (2), the cutting line (4) also forms a ready-to-shape edge (20B) of several glazings (26) on the other side of the cutting line.

7. The process as claimed in claim 5 and 6 taken together, wherein, on each side of the cutting line (4), the ready-to-shape edges (20A, 20B) are the same edge of the glazings (26).

8. The process as claimed in claim 5 and 6 taken together, wherein, on each side of the cutting line (4), the ready-to-shape edges (20A, 20B) are the opposite edges of the glazings (26).

9. The process as claimed in any one of the preceding claims, wherein the first breaking step forms a blank (6) for each glazing (26) to be manufactured, the second breaking step forming the ready-to-shape glazing (26).

10. The process as claimed in any one of the preceding claims, comprising at least one additional cutting station, with at least one additional breaking step.

11. The process as claimed in any one of the preceding claims, comprising, after the second breaking step, a step of shaping the glazing (26).

12. The process as claimed in the preceding claim, wherein the shaping is a grinding.

13. The process as claimed in the preceding claim, wherein two grinding steps are carried out.

14. The process as claimed in any one of the preceding claims, wherein the large-format glass sheet (8) has at least one dimension of at least 2.9 m.
